# EUROPEAN PATENT SPECIFICATION

(11) **EP 2 951 272 B1**
(45) Date of publication and mention of the grant of the patent: **17.10.2018**
(21) Application number: 14746104.0
(22) Date of filing: 31.01.2014
(51) Int. Cl.: C10G 67/04, C10G 21/30, C10G 47/26, C10G 67/00, C10G 21/00

(54) **INTERGRATION OF RESIDUE HYDROCRACKING AND SOLVENT DEASPHALTING**
INTEGRATION VON REST-HYDROCRACKEN UND LÖSUNGSMITTELENTASPHALTIERUNG
INTÉGRATION D'HYDROCRAQUAGE DE RÉSIDU ET DE DÉSASPHALTAGE DE SOLVANT

(30) Priority: 04.02.2013 US 201313758554
(43) Date of publication of application: 09.12.2015
(73) Proprietor: Lummus Technology LLC, Bloomfield, New Jersey 07003-3096 (US)
(72) Inventor: BALDASSARI, Mario C., Morris Plains, NJ 07950 (US); MUKHERJEE, Ujjal K., Montclair, NJ 07042 (US); OLSEN, Ann-Marie, Granite Springs, NY 10527 (US); GREENE, Marvin, I., Clifton, NJ 07013 (US)
(74) Representative: Osha Liang
(86) International application number: PCT/US2014/014106
(87) International publication number: WO 2014/121052

(56) References cited:
- WO-A1-2009/003634
- US-A- 5 980 730
- US-A1- 2004 163 996
- US-A1- 2006 118 463
- US-A1- 2010 122 934
- US-A1- 2010 320 122
- US-A1- 2011 198 265
- US-A1- 2011 226 667
- US-A1- 2012 091 039
- US-A1- 2012 152 805
- US-B2- 8 287 720

## Description

### FIELD OF THE DISCLOSURE

Embodiments disclosed herein relate generally to hydroconversion processes, including processes for hydrocracking residue and other heavy hydrocarbon fractions. More specifically, embodiments disclosed herein relate to hydrocracking of a residuum hydrocarbon feedstock, solvent deasphalting of the unconverted residuum hydrocarbon feedstock, processing the resulting hydrocracked deasphalted oil in a separate residue hydrocracking unit, and processing the pitch from the solvent deasphalting unit in a separate residue hydrocracking unit.

### BACKGROUND

As the worldwide demand for gasoline and other light refinery products has steadily increased, there has been a significant trend toward conversion of higher boiling compounds to lower boiling ones. To meet the increasing demand for distillate fuels increased, refiners have investigated various reactors, such as hydrocracking reactors, residual desulfurization units (RDS), and solvent deasphalting (SDA) units, to convert Residuum, Vacuum Gas Oil (VGO) and other heavy petroleum feedstocks to jet and diesel fuels.

Catalysts have been developed that exhibited excellent distillate selectivity, reasonable conversion activity and stability for heavier feedstocks. The conversion rates attainable by the various processes are limited, however. For example, RDS units alone can produce a 1 wt% sulfur fuel from high sulfur residua, but conversions are generally limited to 35% to 40%. Others have proposed to use SDA units to solvent deasphalt the residuum feed and process the deasphalted oil only in a Residuum Hydrocracking Unit (RHU). Also, others have processed the unconverted vacuum residuum from a RHU in an SDA unit and recycled the deasphalted oil (DAO) back to the front end of the RHU. Still others have proposed to process the SDA pitch directly in a RHU. Nonetheless, economic processes to achieve high hydrocarbon conversions and sulfur removal are desired.

### SUMMARY

In one aspect, embodiments disclosed herein relate to a process for upgrading residuum hydrocarbons. The process may include the following steps: contacting a residuum hydrocarbon fraction and hydrogen with a first hydroconversion catalyst in a first ebullated bed hydroconversion reactor system at a reaction severity of 5,600 °C-MPa-hr (105,000 °F-Bara-hr) to 24,000 °C-MPa-hr (446,000 °F-Bara-hr); recovering a first effluent from the first ebullated bed hydroconversion reactor system; solvent deasphalting a vacuum residuum fraction to produce a deasphalted oil fraction and an asphalt fraction; contacting the deasphalted oil fraction and hydrogen with a second hydroconversion catalyst in a second hydroconversion reactor system at a reaction severity of 11,500 °C-MPa-hr (215,000 °F-Bara-hr) to 40,300 °C-MPa-hr (755,000 °F-Bara-hr); recovering a second effluent from the second hydroconversion reactor system; fractionating the first effluent from the first ebullated bed hydroconversion reactor system and the second effluent from the second hydroconversion reactor system to recover one or more hydrocarbon fractions and the vacuum residuum fraction in a common fractionation system; contacting the asphalt fraction and hydrogen with a third hydroconversion catalyst in a third hydroconversion ebullated bed reactor system at a reaction severity of 13,500 °C-MPa-hr (255,000 °F-Bara-hr) to 47,000 °C-MPa-hr (880,000 °F-Bara-hr); recovering a third effluent from the third hydroconversion ebullated bed reactor system; and fractionating the third effluent from the third hydroconversion ebullated bed reactor system to recover one or more hydrocarbon fractions. The first and third ebullated bed hydroconversion reactor systems comprise one or more ebullated bed reactors, and the second hydroconversion reactor system includes a second ebullated bed hydroconversion reactor system comprising one or more ebullated bed reactors. Further embodiments of the process are defined in the dependent claims. Other aspects and advantages will be apparent from the following description and the appended claims.

### BRIEF DESCRIPTION OF DRAWINGS

Figure 1 is a simplified process flow diagram of a process for upgrading residuum hydrocarbon feedstocks according to embodiments disclosed herein.
Figure 2 is a simplified process flow diagram of a process for an integrated hydroprocessing reactor system to be used with a process for upgrading residuum hydrocarbon feedstocks according to embodiments which do not form part of the claimed subject-matter.
Figure 3 is a simplified alternate process flow diagram of a process for an integrated hydroprocessing reactor system to be used with a process for upgrading residuum hydrocarbon feedstocks according to embodiments disclosed herein.

### DETAILED DESCRIPTION

In one aspect, embodiments herein relate generally to hydroconversion processes, including processes for hydrocracking residue and other heavy hydrocarbon fractions. More specifically, embodiments disclosed herein relate to hydrocracking of a residuum hydrocarbon feedstock, solvent deasphalting of the unconverted residuum hydrocarbon feedstock, processing the resulting hydrocracked deasphalted oil in a separate residue hydrocracking unit, and processing the pitch from the solvent deasphalting in a separate residue hydrocracking unit.

Hydroconversion processes disclosed herein may be used for reacting residuum hydrocarbon feedstocks at conditions of elevated temperatures and pressures in the presence of hydrogen and one or more hydroconversion catalyst to convert the feedstock to lower molecular weight products with reduced contaminant (such as sulfur and/or nitrogen) levels. Hydroconversion processes may include, for example, hydrogenation, desulfurization, denitrogenation, cracking, conversion, demetallization, and removal of metals, Conradson Carbon Residue (CCR) or asphaltenes removal, etc.

As used herein, residuum hydrocarbon fractions, or like terms referring to residuum hydrocarbons, are defined as a hydrocarbon fraction having boiling points or a boiling range above 340°C but could also include whole heavy crude processing. Residuum hydrocarbon feedstocks that may be used with processes disclosed herein may include various refinery and other hydrocarbon streams such as petroleum atmospheric or vacuum residua, deasphalted oils, deasphalter pitch, hydrocracked atmospheric tower or vacuum tower bottoms, straight run vacuum gas oils, hydrocracked vacuum gas oils, fluid catalytically cracked (FCC) slurry oils, vacuum gas oils from an ebullated bed hydrocracking process, shale-derived oils, coal-derived oils, tar sands bitumen, tall oils, bio-derived crude oils, black oils, as well as other similar hydrocarbon streams, or a combination of these, each of which may be straight run, process derived, hydrocracked, partially desulfurized, and/or partially demetallized streams. In some embodiments, residuum hydrocarbon fractions may include hydrocarbons having a normal boiling point of at least 480°C, at least 524°C, or at least 565°C.

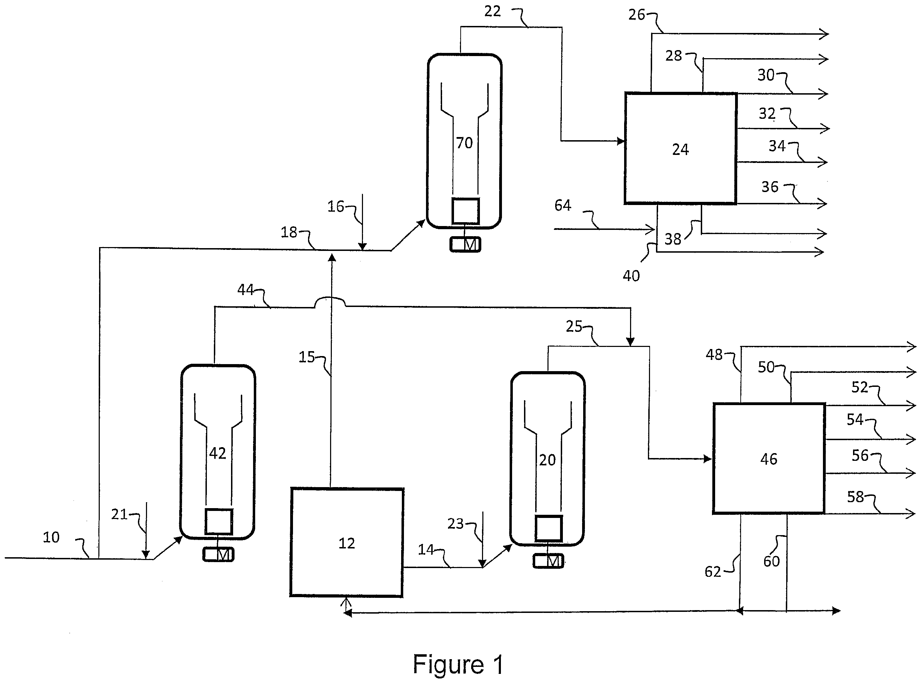

Referring now to Figure 1, a residuum hydrocarbon fraction (residuum) 10 and hydrogen 21 may be fed to an ebullated bed reactor system 42, which may include one or more ebullated bed reactors arranged in series or parallel, where the hydrocarbons and hydrogen are contacted with a hydroconversion catalyst to react at least a portion of the residuum with hydrogen to form lighter hydrocarbons, demetallize the metals contained in residuum, remove Conradson Carbon Residue, or otherwise convert the residuum to useful products.

Reactors in ebullated bed reactor 42 may be operated at temperatures in the range from 380°C to 450°C, hydrogen partial pressures in the range from 7 MPa (70 bara) to 17 MPa (170 bara), and liquid hourly space velocities (LHSV) in the range from 0.2 h⁻¹ to 2.0 h⁻¹. Within the ebullated bed reactors, the catalyst may be back mixed and maintained in random motion by the recirculation of the liquid product. This may be accomplished by first separating the recirculated oil from the gaseous products. The oil may then be recirculated by means of an external pump, or, as illustrated, by a pump having an impeller mounted in the bottom head of the reactor.

Target conversions in ebullated bed reactor system 42 may be in the range from 30 wt% to 75 wt%, depending upon the feedstock being processed. In any event, target conversions should be maintained below the level where sediment formation becomes excessive and thereby prevent continuity of operations. In addition to converting the residuum hydrocarbons to lighter hydrocarbons, sulfur removal may be in the range from 40 wt% to 65 wt%, metals removal may be in the range from 40 wt% to 65 wt% and Conradson Carbon Residue (CCR) removal may be in the range from 30 wt% to 60 wt%.

Reactor severity may be defined as the catalyst average temperature in degrees Fahrenheit of the catalysts loaded in the one or more ebullated bed hydrocracking reactors multiplied by the average hydrogen partial pressure of the ebullated bed hydrocracking reactors in Bar absolute and divided by the LHSV in the ebullated bed hydrocracking reactors. The reactor severity of the ebullated bed reactor system 42 is in the range from 5,600 °C-MPa-Hr (105,000 °F-Bara-Hr) to 24,000 °C-MPa-Hr (446,000 °F-Bara-Hr).

Following conversion in ebullated bed reactor system 42, the partially converted hydrocarbons may be recovered via flow line 44 as a mixed vapor / liquid effluent and fed to a fractionation system 46 to recover one or more hydrocarbon fractions. As illustrated, fractionation system 46 may be used to recover an offgas 48 containing light hydrocarbon gases and hydrogen sulfide (H₂S), a light naphtha fraction 50, a heavy naphtha fraction 52, a kerosene fraction 54, a diesel fraction 56, a light vacuum gas oil fraction 58, a heavy gas oil fraction 60, and a vacuum residuum fraction 62. In some embodiments, vacuum residuum fraction 62 may be recycled for further processing, such as to a solvent deasphalting (SDA) unit 12, the ebullated bed reactor system 42, or other reaction units 70, 20 discussed below. When the vacuum residuum fraction 62 is sent to the SDA unit 12, a portion of the heavy gas oil fraction 60 may also be routed to the SDA unit 12.

Fractionation system 46 may include, for example, a high pressure high temperature (HP/HT) separator to separate the effluent vapor from the effluent liquids. The separated vapor may be routed through gas cooling, purification, and recycle gas compression, or may be first processed through an Integrated Hydroprocessing Reactor System (IHRS), which may include one or more additional hydroconversion reactors, alone or in combination with external distillates and/or distillates generated in the hydrocracking process, and thereafter routed for gas cooling, purification, and compression.

In some embodiments, the vacuum residuum fraction 62 is fed to a Solvent Deasphalting Unit (SDA) 12. In SDA 12, the vacuum residuum fraction 62 is contacted with a solvent to selectively dissolve asphaltenes and similar hydrocarbons to produce a deasphalted oil (DAO) fraction 14 and a pitch fraction 15. In other embodiments, a portion of the heavy gas oil fraction 60 may also be fed to the SDA 12.

Solvent deasphalting may be performed in the SDA 12, for example, by contacting the residuum hydrocarbon feed with a light hydrocarbon solvent at temperatures in the range from 38°C to 204°C and gauge pressures in the range from 0.7 MPa (7 barg) to 7 MPa (70 barg). Solvents useful in the SDA 12 may include C3, C4, C5, C6 and/or C7 hydrocarbons, such as propane, butane, isobutene, pentane, isopentane, hexane, heptane, or mixtures thereof, for example. The use of the light hydrocarbon solvents may provide a high lift (high DAO yield). In some embodiments, the DAO fraction 14 recovered from the SDA unit 12 may contain 500 wppm to 5000 wppm asphaltenes (i.e., heptane insoluble), 50 to 150 wppm metals (such as Ni, V, and others), and 5 wt% to 15 wt% Conradson Carbon Residue (CCR).

The DAO fraction 14 and hydrogen 23 may be fed to a hydrocracking reactor system 20, which may include one or more hydrocracking reactors, arranged in series or parallel. In reactor system 20, the DAO fraction 14 may be hydrocracked under hydrogen partial pressures in the range from 7 MPa (70 bara) to 18 MPa (180 bara), temperatures in the range from 390°C to 460°C, and LHSV in the range from 0.1 h⁻¹ to 2.0 h⁻¹ in the presence of a catalyst. According to the disclosure, wherein hydrocracking reactor system 20 includes one or more ebullated bed reactors, the second hydroconversion reactor system 20 is operated at higher severity conditions than those in reactor system 42, higher severity referring to a higher temperature, a higher pressure, a lower space velocity or combinations thereof as indicated below.

Depending on the vacuum residuum feedstock properties, the extent to which metals and Conradson Carbon Residue are removed in the ebullated bed reactor system 42, and the SDA solvent used, the DAO recovered may be treated in a fixed bed reaction system or an ebullated bed reactor system 20, as illustrated, which may be similar to that described above for ebullated bed reactor system 42 with respect to gas / liquid separations and catalyst recirculation, among other similarities. A fixed bed reactor system may be used, for example, where the metals and Conradson Carbon Residue content of the DAO is less than 80 wppm and 10 wt%, respectively, such as less than 50 wppm ad 7 wt%, respectively. An ebullated bed reactor system may be used, for example, when the metals and Conradson Carbon Residue contents are higher than those listed above for the fixed bed reactor system. In either hydrocracking reactor system 20, the number of reactors used may depend on the charge rate, the overall target residue conversion level, and the level of conversion attained in ebullated bed reactor system 42, among other variables. In some embodiments, one or two hydrocracking reactors may be used in hydrocracking reactor system 20. For an ebullated bed reactor system 20, the reactor severity is in the range from 11,500 °C-MPa-Hr (215,000°F-Bara-Hr) to 40,300 °C-MPa-Hr (755,000°F-Bara-Hr).

Following conversion in hydrocracking reactor system 20, the partially converted hydrocarbons may be recovered via flow line 25 as a mixed vapor / liquid effluent and fed to the fractionation system 46 to recover one or more hydrocarbon fractions as described above.

The pitch fraction 15 and hydrogen 16 may be fed to an ebullated bed reactor system 70, which may include one or more ebullated bed reactors, where the hydrocarbons and hydrogen are contacted with a hydroconversion catalyst to react at least a portion of the pitch with hydrogen to form lighter hydrocarbons, demetallize the pitch hydrocarbons, remove Conradson Carbon Residue, or otherwise convert the pitch to useful products. In some embodiments, a portion of the residuum hydrocarbon fraction 10 may also be fed to the ebullated bed reactor system 70. The ratio of the residuum hydrocarbon fraction 10 in the ebullated bed reactor system 70 to the ebullated bed reactor system 42 may range from 0.1/1 to 10/1. In other embodiments, the ratio of the residuum hydrocarbon fraction 10 in the ebullated bed reactor system 70 to the ebullated bed reactor system 42 may be 1/1.

The fixed-bed hydrotreating reactors 66 or 166 may contain hydroprocessing catalysts tailored to hydrotreating reactions such as hydrodesulfurization, hydrodenitrogenation, olefins saturation, hydrodeoxygenation and hydrodearomatization. Alternatively, the fixed-bed hydrotreating reactors 66 or 166 can contain hydroprocessing catalysts tailored to hydrocracking reactions. In other embodiments, the fixed-bed hydrotreating reactors 66 or 166 can contain a mixture of hydrotreating catalysts and hydrocracking catalysts. Examples of catalysts which may be utilized, but are not limited to, may be found in US 4,990,243; US 5,215,955; and US 5,177,047. In some embodiments, the fixed-bed hydrotreating reactors 66 or 166 may not provide any demetallization and demetallization catalysts may not be necessary.

Reactors in the ebullated bed reactor system 70 may be operated at temperatures in the range from 380°C to 450°C, hydrogen partial pressures in the range from 9 MPa (90 bara) to 17 MPa (170 bara), and liquid hourly space velocities (LHSV) in the range from 0.15 h⁻¹ to 2.0 h⁻¹. Within the ebullated bed reactors, the catalyst may be back mixed and maintained in random motion by the recirculation of the liquid product. This may be accomplished by first separating the recirculated oil from the gaseous products. The oil may then be recirculated by means of an external pump, or, as illustrated, by a pump having an impeller mounted in the bottom head of the reactor.

Target conversions in the ebullated bed reactor system 70 may be in the range from 30 wt% to 75 wt%, depending upon the feedstock being processed. In any event, target conversions should be maintained below the level where sediment formation becomes excessive and thereby prevent continuity of operations. In addition to converting the residuum hydrocarbons to lighter hydrocarbons, sulfur removal may be in the range from 40 wt% to 65 wt%, metals removal may be in the range from 40 wt% to 65 wt% and Conradson Carbon Residue (CCR) removal may be in the range from 30 wt% to 60 wt%.

The reactor severity of the ebullated bed reactor system 70 is in the range from 13,500 °C-MPa-Hr (255,000 °F-Bara-Hr) to 47,000 °C-MPa-Hr (880,000 °F-Bara-Hr).

Following conversion in the ebullated bed reactor system 70, the partially converted hydrocarbons may be recovered via flow line 22 as a mixed vapor / liquid effluent and fed to a fractionation system 24 to recover one or more hydrocarbon fractions. As illustrated, fractionation system 24 may be used to recover an offgas 26, a light naphtha fraction 28, a heavy naphtha fraction 30, a kerosene fraction 32, a diesel fraction 34, a light vacuum gas oil fraction 36, a heavy gas oil fraction 38, and a vacuum residuum fraction 40. In some embodiments, vacuum residuum fraction 40 may be recycled for further processing. In other embodiments, vacuum residuum fraction 40 may be blended with a cutter fraction 64 to produce fuel oil. In some embodiments, the fuel oil may have a sulfur content of less than 1.5 weight percent.

Fractionation system 24 may include, for example, a high pressure high temperature (HP/HT) separator to separate the effluent vapor from the effluent liquids. The separated vapor may be routed through gas cooling, purification, and recycle gas compression, or may be first processed through an Integrated Hydroprocessing Reactor System, alone or in combination with external distillates and/or distillates generated in the hydrocracking process and thereafter routed for gas cooling, purification, and compression.

The separated liquid from the HP/HT separator may be flashed and routed to an atmospheric distillation system along with other distillate products recovered from the gas cooling and purification section. The atmospheric tower bottoms, such as hydrocarbons having an initial boiling point of at least 340°C, such as an initial boiling point in the range from 340°C to 427°C, may then be further processed through a vacuum distillation system to recover vacuum distillates.

The vacuum tower bottoms product, such as hydrocarbons having an initial boiling point of at least 480°C, such as an initial boiling point in the range from 480°C to 565°C, may then be routed to tankage after cooling, such as by direct heat exchange or direct injection of a portion of the residuum hydrocarbon feed into the vacuum tower bottoms product.

Catalysts useful in the ebullated bed reactors or hydrocracking reactors may include any catalyst useful in the hydroconversion processes of hydrotreating or hydrocracking a hydrocarbon feedstock. A hydrotreating catalyst, for example, may include any catalyst composition that may be used to catalyze the hydrogenation of hydrocarbon feedstocks to increase its hydrogen content and/or remove heteroatom contaminants. A hydrocracking catalyst, for example, may include any catalyst composition that may be used to catalyze the addition of hydrogen to large or complex hydrocarbon molecules as well as the cracking of the molecules to obtain smaller, lower molecular weight molecules.

In some embodiments, the effluents from the hydrocracking reactor system 20, the ebullated bed reactor system 42, or the ebullated bed reactor system 70 may be processed prior to entering the fractionation system 24 or the fractionation system 46 through an Integrated Hydroprocessing Reactor System (IHRS). The IHRS is an inline fixed-bed hydrotreating system utilizing an upstream high pressure /high temperature vapor/liquid (HP/HT V/L) separator located between the ebullated-bed hydroprocessing reactor and the downstream IHRS. The separator allows for a separation between the unconverted residuum in the liquid effluent of the HP/HT V/L separator and the overhead vapor products boiling below 538°C (1000°F) normal boiling point which may provide a lower cost route for further hydrotreating or hydrocracking of the gas oils, diesel and naphtha fractions formed by cracking of residuum in the upstream ebullated bed reactor.

The separated liquid from the HP/HT separator may be flashed and routed to an atmospheric distillation system along with other distillate products recovered from the gas cooling and purification section. The atmospheric tower bottoms, such as hydrocarbons having an initial boiling point of at least 340°C, such as an initial boiling point in the range from 340°C to 427°C, may then be further processed through a vacuum distillation system to recover vacuum distillates.

The vacuum tower bottoms product, such as hydrocarbons having an initial boiling point of at least 480°C, such as an initial boiling point in the range from 480°C to 565°C, may then be routed to tankage after cooling, such as by direct heat exchange or direct injection of a portion of the residuum hydrocarbon feed into the vacuum tower bottoms product.

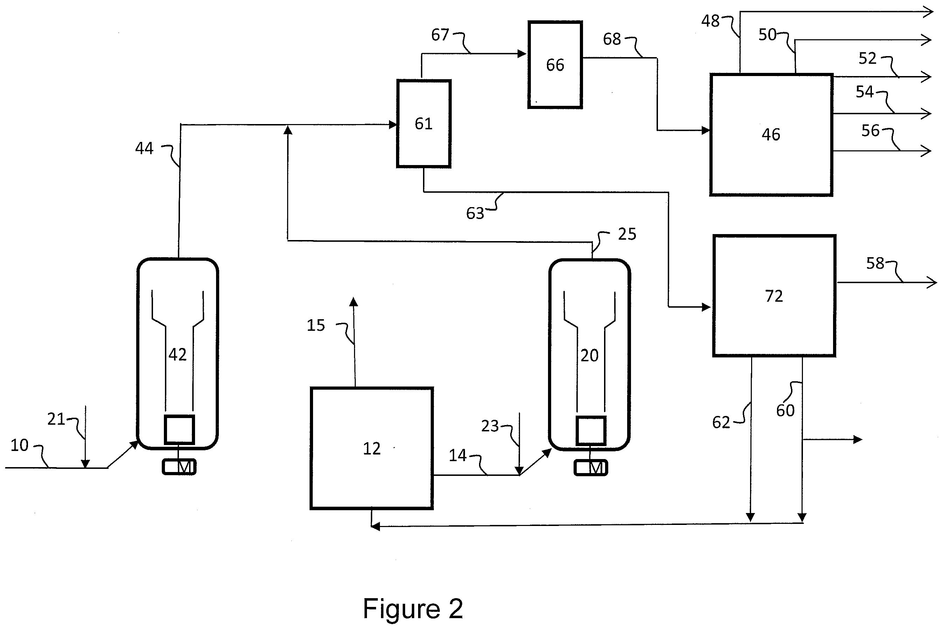

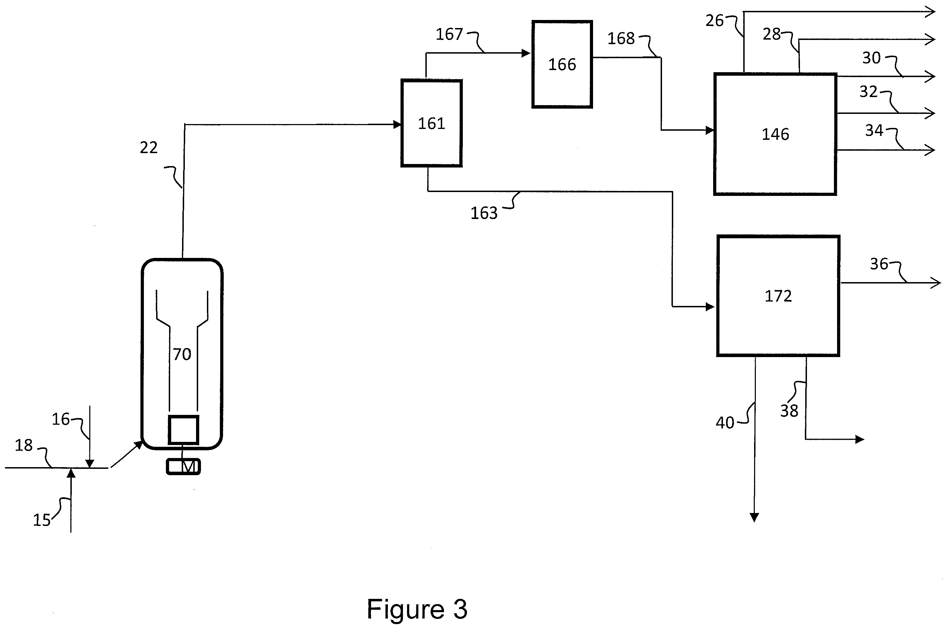

Figure 3 illustrates an embodiment for the IHRS and is described below, however other embodiments will be obvious to those skilled in the art as being possible. Figure 2 illustrates an embodiment which does not form part of the claimed subject-matter, where the IHRS is installed downstream of the blended stream derived by mixing the partially converted hydrocarbons recovered via flow line 44 from ebullated bed reactor system 42 and the partially converted hydrocarbons recovered via flow line 25 from the hydrocracking reactor system 20. Figure 3 illustrates an embodiment where the IHRS is installed downstream of the ebullated bed hydroprocessing reactor 70.

As shown in Figure 2, the effluent streams 44 and 25 from ebullated bed hydroprocessing reactor 42 and the hydrocracking reactor system 20, respectively, may be cooled in a heat exchanger (not shown) and fed to a HP/HT V/L separator 61 where a vapor stream including the light products and distillates boiling below 538°C (1000°F) normal boiling point and a liquid stream including unconverted residuum may be separated and processed separately in downstream equipment. A vapor stream 67 may be fed to a fixed-bed hydroprocessing reactor 66 to carry out hydrotreating, hydrocracking or a combination thereof. An effluent stream 68 from the IHRS fixed-bed reactor system 66 is fed to the fractionation system 46 which recovers an offgas stream 48, light hydrotreated or hydrocracked naphtha stream 50, heavy hydrotreated or hydrocracked naphtha stream 52, hydrotreated or hydrocracked kerosene stream 54, hydrotreated or hydrocracked diesel stream 56, as described above. The liquid stream 63 may be cooled in a heat exchanger (not shown) and depressurized in a pressure letdown system (not shown) before being fed to a vacuum fractionation system 72 which recovers a light hydrotreated or hydrocracked VGO stream 58, a heavy hydrotreated or hydrocracked VGO stream 60 and an unconverted vacuum residuum stream 62. In some embodiments, the vacuum tower bottoms product stream, such as hydrocarbons having an initial boiling point of at least 480°C, such as an initial boiling point in the range from 480°C to 565°C, may be routed to tankage after cooling, such as by direct heat exchange or direct injection of a portion of the residuum hydrocarbon feed into the vacuum tower bottoms product.

As shown in Figure 3, the effluent stream 22 from the ebullated bed reactor system 70 may be cooled in a heat exchanger (not shown) and fed to a HP/HT V/L separator 161 where a vapor stream including the light products and distillates boiling below 538°C (1000°F) normal boiling point and a liquid stream including unconverted residuum may be separated and processed separately in downstream equipment. A vapor stream 167 is fed to a fixed-bed hydroprocessing reactor 166 to carry out hydrotreating, hydrocracking or a combination thereof. An effluent stream 168 from the IHRS fixed-bed reactor system 166 may be fed to an atmospheric fractionation system 146 which recovers an offgas stream 26, light hydrotreated or hydrocracked naphtha stream 28, heavy hydrotreated or hydrocracked naphtha stream 30, hydrotreated or hydrocracked kerosene stream 32, hydrotreated or hydrocracked diesel stream 34. A liquid stream 163 is cooled in a heat exchanger (not shown) and depressurized in a pressure letdown system (not shown) and may be fed to a vacuum fractionation system 172 which recovers a light hydrotreated or hydrocracked VGO stream 36, a heavy hydrotreated or hydrocracked VGO stream 38 and an unconverted vacuum residuum stream 40. In some embodiments, the vacuum tower bottoms product stream, such as hydrocarbons having an initial boiling point of at least 480°C, such as an initial boiling point in the range from 480°C to 565°C, may then be routed to tankage after cooling, such as by direct heat exchange or direct injection of a portion of the residuum hydrocarbon feed into the vacuum tower bottoms product.

Hydroconversion catalyst compositions for use in the hydroconversion process according to embodiments disclosed herein are well known to those skilled in the art and several are commercially available from W.R. Grace & Co., Criterion Catalysts & Technologies, and Albemarle, among others. Suitable hydroconversion catalysts may include one or more elements selected from Groups 4-12 of the Periodic Table of the Elements. In some embodiments, hydroconversion catalysts according to embodiments disclosed herein may comprise, consist of, or consist essentially of one or more of nickel, cobalt, tungsten, molybdenum and combinations thereof, either unsupported or supported on a porous substrate such as silica, alumina, titania, or combinations thereof. As supplied from a manufacturer or as resulting from a regeneration process, the hydroconversion catalysts may be in the form of metal oxides, for example. In some embodiments, the hydroconversion catalysts may be pre-sulfided and/or pre-conditioned prior to introduction to the hydrocracking reactor(s).

Distillate hydrotreating catalysts that may be useful include catalyst selected from those elements known to provide catalytic hydrogenation activity. At least one metal component selected from Group 8-10 elements and/or from Group 6 elements is generally chosen. Group 6 elements may include chromium, molybdenum and tungsten. Group 8-10 elements may include iron, cobalt, nickel, ruthenium, rhodium, palladium, osmium, iridium and platinum. The amount(s) of hydrogenation component(s) in the catalyst suitably range from 0.5% to 10% by weight of Group 8-10 metal component(s) and from 5% to 25% by weight of Group 6 metal component(s), calculated as metal oxide(s) per 100 parts by weight of total catalyst, where the percentages by weight are based on the weight of the catalyst before sulfiding. The hydrogenation components in the catalyst may be in the oxidic and/or the sulphidic form. If a combination of at least a Group 6 and a Group 8 metal component is present as (mixed) oxides, it will be subjected to a sulfiding treatment prior to proper use in hydrocracking. In some embodiments, the catalyst comprises one or more components of nickel and/or cobalt and one or more components of molybdenum and/or tungsten or one or more components of platinum and/or palladium. Catalysts containing nickel and molybdenum, nickel and tungsten, platinum and/or palladium are useful.

Residue hydrotreating catalyst that may be useful include catalysts generally composed of a hydrogenation component, selected from Group 6 elements (such as molybdenum and/or tungsten) and Group 8-10 elements (such as cobalt and/or nickel), or a mixture thereof, which may be supported on an alumina support. Phosphorous (Group 15) oxide is optionally present as an active ingredient. A typical catalyst may contain from 3 to 35 wt % hydrogenation components, with an alumina binder. The catalyst pellets may range in size from 0.67 mm (1/32 inch) to 3.17 mm (1/8 inch), and may be of a spherical, extruded, trilobate or quadrilobate shape. In some embodiments, the feed passing through the catalyst zone contacts first a catalyst preselected for metals removal, though some sulfur, nitrogen and aromatics removal may also occur. Subsequent catalyst layers may be used for sulfur and nitrogen removal, though they would also be expected to catalyze the removal of metals and/or cracking reactions. Catalyst layer(s) for demetallization, when present, may comprise catalyst(s) having an average pore size ranging from 1.25 × 10⁻⁸ to 2.25 × 10⁻⁸ m (125 to 225 Angstroms) and a pore volume ranging from 0.5-1.1 cm³/g. Catalyst layer(s) for denitrogenation/desulfurization may comprise catalyst(s) having an average pore size ranging from 1.00 × 10⁻⁸ to 1.90 × 10⁻⁸ m (100 to 190 Angstroms) with a pore volume of 0.5-1.1 cm³/g. U.S. Pat. No. 4,990,243 describes a hydrotreating catalyst having a pore size of at least 6.00 × 10⁻⁹ m (60 Angstroms), and preferably from 7.50 × 10⁻⁹ to 1.20 × 10⁻⁸ m (75 Angstroms to 120 Angstroms). A demetallization catalyst useful for the present process is described, for example, in U.S. Pat. No. 4,976,848. Likewise, catalysts useful for desulfurization of heavy streams are described, for example, in U.S. Pat. Nos. 5,215,955 and 5,177,047. Catalysts useful for desulfurization of middle distillate, vacuum gas oil streams and naphtha streams are described, for example, in U.S. Pat. No. 4,990,243.

Useful residue hydrotreating catalysts include catalysts having a porous refractory base made up of alumina, silica, phosphorous, or various combinations of these. One or more types of catalysts may be used as residue hydrotreating catalyst, and where two or more catalysts are used, the catalysts may be present in the reactor zone as layers. The catalysts in the lower layer(s) may have good demetallization activity. The catalysts may also have hydrogenation and desulfurization activity, and it may be advantageous to use large pore size catalysts to maximize the removal of metals. Catalysts having these characteristics are not optimal for the removal of Conradson Carbon Residue and sulfur. The average pore size for catalyst in the lower layer or layers will usually be at least 6.00 × 10⁻⁹ m (60 Angstroms) and in many cases will be considerably larger. The catalyst may contain a metal or combination of metals such as nickel, molybdenum, or cobalt. Catalysts useful in the lower layer or layers are described in U.S. Pat. Nos. 5,071,805 5,215,955, and 5,472,928. For example, those catalysts as described in U.S. Patent No. 5,472,928 and having at least 20% of the pores in the range of 1.30 × 10⁻⁸ to 1.70 × 10⁻⁸ m (130 to 170 Angstroms), based on the nitrogen method, may be useful in the lower catalysts layer(s). The catalysts present in the upper layer or layers of the catalyst zone should have greater hydrogenation activity as compared to catalysts in the lower layer or layers. Consequently catalysts useful in the upper layer or layers may be characterized by smaller pore sizes and greater Conradson Carbon Residue removal, denitrogenation and desulfurization activity. Typically, the catalysts will contain metals such as, for example, nickel, tungsten, and molybdenum to enhance the hydrogenation activity. For example, those catalysts as described in U.S. Patent No. 5,472,928 and having at least 30% of the pores in the range of 9.00 × 10⁻⁹ to 1.35 × 10⁻⁸ m (95 to 135 Angstroms), based on the nitrogen method, may be useful in the upper catalysts layers. The catalysts may be shaped catalysts or spherical catalysts. In addition, dense, less friable catalysts may be used in the upflow fixed catalyst zones to minimize breakage of the catalyst particles and the entrainment of particulates in the product recovered from the reactor.

One skilled in the art will recognize that the various catalyst layers may not be made up of only a single catalyst, but may be composed of an intermixture of different catalysts to achieve the optimal level of metals or Conradson Carbon Residue removal and desulfurization for that layer. Although some hydrogenation will occur in the lower portion of the zone, the removal of Conradson Carbon Residue, nitrogen, and sulfur may take place primarily in the upper layer or layers. Obviously additional metals removal also will take place. The specific catalyst or catalyst mixture selected for each layer, the number of layers in the zone, the proportional volume in the bed of each layer, and the specific hydrotreating conditions selected will depend on the feedstock being processed by the unit, the desired product to be recovered, as well as commercial considerations such as cost of the catalyst. All of these parameters are within the skill of a person engaged in the petroleum refining industry and should not need further elaboration here.

While described above with respect to two separate fractionation systems 24, 46, embodiments disclosed herein also contemplate fractionating the effluents 22, 44, and 25 in a common fractionation system. For example, the effluents may be fed into a common gas cooling, purification, and compression loop before further processing in an atmospheric tower and a vacuum tower as described above. The use of a combined separation scheme may provide for a reduced capital investment, when desired, but may result in the production of a single fuel oil fraction having a sulfur level intermediate those achieved by separate processing.

As described above, embodiments disclosed herein effectively processes vacuum residue and intermediate streams through multiple hydrocracking reactors, each operating at different severities and processing different feed compositions with a SDA located within the process, extending the residue conversion limits above those which can be attained by residue hydrocracking alone. Further, the higher conversions may be attained using less catalytic reactor volume as compared to other schemes proposed to achieve similar conversions. As a result, embodiments disclosed herein may provide comparable or higher conversions but requiring a lower capital investment requirement. Further, embodiments disclosed herein may be used to produce a fuel oil having less than 1 wt% sulfur from a high sulfur containing residue feed while maximizing overall conversion.

The overall processing schemes disclosed herein may be performed using low reactor volumes while still achieving high conversions. Likewise, other resulting advantages may include: reduced catalyst consumption rates due to rejecting metals in the asphalt from the SDA unit; reduced capital investment; and elimination or significant reduction in the need for injection of slurry oil upstream of the ebullated bed reactors, among other advantages.

While the disclosure includes a limited number of embodiments, those skilled in the art, having benefit of this disclosure, will appreciate that other embodiments may be devised which do not depart from the scope of the present disclosure. Accordingly, the scope should be limited only by the attached claims.

## Claims

1. A process for upgrading residuum hydrocarbons, the process comprising:
contacting a residuum hydrocarbon fraction (10) and hydrogen (21) with a first hydroconversion catalyst in a first ebullated bed hydroconversion reactor system (42) at a reaction severity of 5,600 °C-MPa-hr (105,000 °F-Bara-hr) to 24,000 °C-MPa-hr (446,000 °F-Bara-hr);
recovering a first effluent (44) from the first ebullated bed hydroconversion reactor system (42);
solvent deasphalting a vacuum residuum fraction (62) to produce a deasphalted oil fraction (14) and an asphalt fraction (15);
contacting the deasphalted oil fraction (14) and hydrogen (23) with a second hydroconversion catalyst in a second hydroconversion reactor system (20) at a reaction severity of 11,500 °C-MPa-hr (215,000 °F-Bara-hr) to 40,300 °C-MPa-hr (755,000 °F-Bara-hr);
recovering a second effluent (25) from the second hydroconversion reactor system (20); and
fractionating the first effluent (44) from the first ebullated bed hydroconversion reactor system (42) and the second effluent (25) from the second hydroconversion reactor system (20) to recover one or more hydrocarbon fractions (48, 50, 52, 54, 56, 58, 60) and the vacuum residuum fraction (62) in a common fractionation system (46);
contacting the asphalt fraction (15) and hydrogen (16) with a third hydroconversion catalyst in a third hydroconversion ebullated bed reactor system (70) at a reaction severity of 13,500 °C-MPa-hr (255,000 °F-Bara-hr) to 47,000 °C-MPa-hr (880,000 °F-Bara-hr);
recovering a third effluent (22) from the third hydroconversion ebullated bed reactor system (70); and
fractionating the third effluent (22) from the third hydroconversion ebullated bed reactor system (70) to recover one or more hydrocarbon fractions (26, 28, 30, 32,34,36,38),
wherein the first and third ebullated bed hydroconversion reactor systems (42, 70) comprise one or more ebullated bed reactors, and
wherein the second hydroconversion reactor system (20) includes a second ebullated bed hydroconversion reactor system comprising one or more ebullated bed reactors.

2. The process of claim 1, further comprising:
mixing the asphalt fraction (15) with a diluent prior to contacting with hydrogen (16).

3. The process of claim 2, wherein the diluent comprises at least one of a second portion of a residuum hydrocarbon fraction, FCC cycle oils, slurry oils, aromatics extracts, and straight run vacuum gas oils.

4. The process of claim 1, wherein the deasphalted oil fraction (14) has a metals content of greater than 80 wppm and a Conradson Carbon Residue content of greater than 10 wt%.

5. The process of claim 1, further comprising recycling the vacuum residuum fraction (62) to at least one of the solvent deasphalting, a vacuum distillation system, the first ebullated bed hydroconversion reactor system (42), the second hydroconversion reactor system (20), and the third ebullated bed hydroconversion reactor system (70).

6. The process of claim 1, wherein the residuum hydrocarbon fraction (10) comprises at least one of petroleum atmospheric or vacuum residua, deasphalted oils, deasphalter pitch, hydrocracked atmospheric tower or vacuum tower bottom, straight run vacuum gas oil, hydrocracked vacuum gas oil, fluid catalytically cracked (FCC) slurry oils, vacuum gas oil from an ebullated bed process, shale-derived oils, coal-derived oils, bioderived crude oils, tar sands bitumen, tall oils, black oils.

7. The process of claim 1, wherein contacting in the first ebullated bed hydroconversion reactor system (42) results in a hydrocarbon conversion in the range from 30 wt% to 75 wt%, sulfur removal is in the range from 40 wt% to 65 wt%, metals removal is in the range from 40 wt% to 65 wt% and Conradson Carbon Residue removal is in the range from 30 wt% to 60 wt%.

8. The process of claim 1, wherein a fuel oil produced via the fractionating the third ebullated bed hydroconversion reactor system effluent (22) has a sulfur content of 1.5 wt% or less.

9. The process of claim 1, wherein an overall conversion of the residuum hydrocarbon fraction (10) is in the range from 75 wt% to 90 wt%.

10. The process of claim 1, wherein the ratio of the asphalt fraction feed processed in the third ebullated bed hydroconversion system (70) to that in the first ebullated bed hydroconversion system (42) is in the range from 0.1/1 to 10/1.

11. The process of claim 1, wherein a solvent used in a solvent deasphalting unit (12) is a light hydrocarbon containing from 3 to 7 carbon atoms.

12. The process of claim 1, wherein a solvent used in a solvent deasphalting unit (12) is at least one of an aromatic solvent, a mixture of gas oils, and a light naphtha from the fractionated first, second, or third effluent or imported.

13. The process of claim 1, wherein fractionating the third effluent (22) further comprises:
separating the third effluent (22) in a separator (161) to produce a vapor fraction (167) and a liquid fraction (163);
fractionating the liquid fraction (163) to recover the vacuum residuum fraction (40) in a first fractionation system (172);
contacting the vapor fraction (167) with a fourth hydroconversion catalyst in a fourth hydroconversion reactor system (166);
recovering a fourth effluent (168) from the fourth hydroconversion reactor system (166); and
fractionating the fourth effluent (168) to recover one or more hydrocarbon fractions (26, 28, 30, 32, 34) in a second fractionation system (146).

## Patentansprüche

1. Verfahren zum Veredeln von Kohlenwasserstoffresten, das Verfahren umfassend:
In-Kontakt-Bringen einer Kohlenwasserstoffrest-Fraktion (10) und Wasserstoff (21) mit einem ersten Hydrokonversions-Katalysator in einem ersten Wallbett-Hydrokonversionsreaktorsystem (42) bei einer Reaktionsstärke von 5600 °C/MPa/h (105 000 °F/bara/h) bis 24 000 °C/MPa/h (446 000 °F/bara/h);
Rückgewinnen eines ersten Abstroms (44) aus dem ersten Wallbett-Hydrokonversionsreaktorsystem (42);
Lösungsmittel-Entasphaltierung einer Vakuumrest-Fraktion (62) zur Herstellung einer entasphaltierten Ölfraktion (14) und einer Asphaltfraktion (15);
In-Kontakt-bringen der entasphaltierten Ölfraktion (14) und Wasserstoff (23) mit einem zweiten Hydrokonversions-Katalysator in einem zweiten Hydrokonversionsreaktorsystem (20) bei einer Reaktionsstärke von 11 500 °C/MPa/h (215 000 °F/bara/h) bis 40 300 °C/MPa/h (755 000 °F/bara/h);
Rückgewinnen eines zweiten Abstroms (25) aus dem zweiten Wallbett-Hydrokonversionsreaktorsystem (20); und
Fraktionieren des ersten Abstroms (44) aus dem ersten Wallbett-Hydrokonversionsreaktorsystem (42) und des zweiten Abstroms (25) aus dem zweiten Wallbett-Hydrokonversionsreaktorsystem (20), um eine oder mehr Kohlenwasserstofffraktionen (48, 50, 52, 54, 56, 58, 60) und die Vakuumrest-Fraktion (62) in einem gemeinsamen Fraktionierungssystem (46) rückzugewinnen;
In-Kontakt-Bringen der Asphalt-Fraktion (15) und Wasserstoff (16) mit einem dritten Hydrokonversionss-Katalysator in einem dritten Wallbett-Hydrokonversionsreaktorsystem (70) bei einer Reaktionsstärke von 13 500 °C/MPa/h (255 000 °F/bara/h) bis 47 000 °C/MPa/h (880 000 °F/bara/h);
Rückgewinnen eines dritten Abstroms (22) aus dem dritten Wallbett-Hydrokonversionsreaktorsystem (70); und
Fraktionieren des dritten Abstroms (22) aus dem dritten Wallbett-Hydrokonversionsreaktorsystem (70), um eine oder mehr Kohlenwasserstofffraktionen (26, 28, 30, 32, 34, 36, 38) rückzugewinnen,
wobei das erste und das dritte Wallbett-Hydrokonversionsreaktorsystem (42, 70) einen oder mehr Wallbettreaktor(en) umfassen, und
wobei das zweite Hydrokonversionsreaktorsystem (20) ein zweites Wallbett-Hydrokonversionsreaktorsystem umfasst, das einen oder mehr Wallbettreaktor(en) umfasst.

2. Verfahren nach Anspruch 1, ferner umfassend:
Vor dem In-Kontakt-Bringen mit Wasserstoff (16), Mischen der Asphaltfraktion (15) mit einem Verdünnungsmittel.

3. Verfahren nach Anspruch 2, wobei das Verdünnungsmittel einen zweiten Teil einer Kohlenwasserstoffrest-Fraktion und/oder FCC-Öle und/oder Schlacke-Öle und/oder aromatische Extrakte und/oder unverschnittene Vakuumgasöle aufweist.

4. Verfahren nach Anspruch 1, wobei die entasphaltierte Ölfraktion (14) einen Metallgehalt von mehr als 80 Millionstel-Gewichtsteilen und einen Koksrückstand nach Conradson von mehr als 10 Gew.-% aufweist.

5. Verfahren nach Anspruch 1, ferner umfassend das Rückführen der Kohlenwasserstoffrest-Fraktion (62) an die Lösungsmittel-Entasphaltierung und/oder ein Vakuum-Destillationssystem und/oder das erste Wallbett-Hydrokonversionsreaktorsystem (42) und/oder das zweite Hydrokonversionsreaktorsystem (20) und/oder das dritte Wallbett-Hydrokonversionsreaktorsystem (70).

6. Verfahren nach Anspruch 1, wobei die Kohlenwasserstoffrest-Fraktion (10) zumindest einen Rest von atmosphärischem oder Vakuum-Erdöl und/oder entasphaltierten Ölen und/oder Entasphaltierungspech und/oder hydrogekracktem Mitteldruckturm und/oder Vakuumturm-Bodensatz und/oder unverschnittenes Vakuumgasöl und/oder hydrogekracktes Vakuumgasöl und/oder fluidkatalytisch gecrackte (FCC) Schlackeöle und/oder Vakuumgasöle aus einem Wallbett-Prozess und/oder aus Schiefer gewonnene Öle und/oder aus Kohle gewonnene Öle und/oder biologisch gewonnene Rohöle und/oder Teersand-Bitumen und/oder Tallöle und/oder Schwarzöle aufweist.

7. Verfahren nach Anspruch 1, wobei das In-Kontakt-Bringen in dem ersten Wallbett-Hydrokonversionsreaktorsystem (42) zu einer Kohlenwasserstoffkonversion im Bereich von 30 Gew.% bis 75 Gew.-% führt, die Entschwefelung in einem Bereich 40 Gew.% bis 65 Gew.-% liegt, die Entmetallisierung in einem Bereich von 40 Gew.-% bis 65 Gew.-% liegt, und die Entfernung des Koksrückstands nach Conradson im Bereich von 30 Gew.-% bis 60 Gew.-% liegt.

8. Verfahren nach Anspruch 1, wobei ein Kraftstoff-Öl, das mittels der Fraktionierung des Abstroms (22) des dritten Wallbett-Hydrokonversionsreaktorsystems hergestellt wurde, einen Schwefelgehalt von 1,5 Gew.-% oder weniger hat.

9. Verfahren nach Anspruch 1, wobei eine insgesamte Umwandlung der Kohlenwasserstoffrest-Fraktion (10) im Bereich von 75 Gew.-% bis 90 Gew.-% liegt.

10. Verfahren nach Anspruch 1, wobei das Verhältnis der Zufuhr der Asphaltfraktion, die in dem dritten Wallbett-Hydrokonversionsreaktorsystem (70) prozessiert wird, zu jener in dem ersten Wallbett-Hydrokonversionsreaktorsystem (42) im Bereich von 0,1/1 bis 10/1 liegt.

11. Verfahren nach Anspruch 1, wobei ein in einer Einheit (12) zur Lösungsmittel-Entasphaltierung verwendetes Lösungsmittel ein leichter Kohlenwasserstoff mit 3 bis 7 Kohlenstoffatomen ist.

12. Verfahren nach Anspruch 1, wobei ein in einer Einheit (12) zur Lösungsmittel-Entasphaltierung verwendetes Lösungsmittel ein aromatisches Lösungsmittel und/oder ein Gemisch aus Gasölen und/oder ein leichtes Naphta aus dem fraktionierten ersten, zweiten oder dritten Abstrom ist oder importiert wird.

13. Verfahren nach Anspruch 1, wobei das Fraktionieren des dritten Abstroms (22) ferner umfasst:
Abscheiden des dritten Abstroms (22) in einem Abscheider (161), um eine Dampffraktion (167) und eine Flüssigfraktion (163) herzustellen,
Fraktionieren der Flüssigfraktion (163), um die Vakuumrest-Fraktion (40) in einem ersten Fraktionierungssystem (172) rückzugewinnen;
In-Kontakt-Bringen der Dampffraktion (167) mit einem vierten Hydrokonversionskatalysator in einem vierten Hydrokonversions-Reaktorsystem (166);
Rückgewinnen eines vierten Abstroms (168) aus dem vierten Hydrokonversions-Reaktorsystem (166); und
Fraktionieren des vierten Abstroms (168), um eine oder mehr Kohlenwasserstofffraktionen (26, 28, 30, 32, 34) in einem zweiten Fraktionierungssystem rückzugewinnen.

## Revendications

1. Procédé de valorisation d'hydrocarbures résiduels, le procédé comprenant :
la mise en contact d'une fraction d'hydrocarbures résiduels (10) et d'hydrogène (21) avec un premier catalyseur d'hydroconversion dans un premier système de réacteur d'hydroconversion à lit bouillonnant (42) à une sévérité de réaction de 5 600 °C-MPa / h (105 000 °F-Bara / h) à 24 000 °C-MPa/h (446 000 °F-Bara / h) ;
la récupération d'un premier effluent (44) dans le premier système de réacteur d'hydroconversion à lit bouillonnant (42) ;
le désasphaltage au solvant d'une fraction résiduelle de distillation sous vide (62) pour produire une fraction d'huile désasphaltée (14) et une fraction asphalte (15) ;
la mise en contact de la fraction d'huile désasphaltée (14) et d'hydrogène (23) avec un deuxième catalyseur d'hydroconversion dans un deuxième système de réacteur d'hydroconversion (20) à une sévérité de réaction de 11 500 °C-MPa / h (215 000 °F-Bara / h) à 40 300 °C-MPa/h (755 000 °F-Bara / h) ;
la récupération d'un deuxième effluent (25) dans le deuxième système de réacteur d'hydroconversion (20) ; et
le fractionnement du premier effluent (44) du premier système de réacteur d'hydroconversion à lit bouillonnant (42) et du deuxième effluent (25) du deuxième système de réacteur d'hydroconversion (20) pour récupérer une ou plusieurs fractions d'hydrocarbures (48, 50, 52, 54, 56, 58, 60) et la fraction résiduelle sous vide (62) dans un système de fractionnement commun (46) ;
la mise en contact de la fraction asphalte (15) et d'hydrogène (16) avec un troisième catalyseur d'hydroconversion dans un troisième système de réacteur d'hydroconversion à lit bouillonnant (70) à une sévérité de réaction de 13 500 °C-MPa / h (255 000 °F-Bara / h) à 47 000 °C-MPa/h (880 000 °F-Bara / h) ;
la récupération d'un troisième effluent (22) du troisième système de réacteur d'hydroconversion à lit bouillonnant (70) ; et
le fractionnement du troisième effluent (22) du troisième système de réacteur d'hydroconversion à lit bouillonnant (70) pour récupérer une ou plusieurs fractions d'hydrocarbures (26, 28, 30, 32, 34, 36, 38),
dans lequel les premier et troisième systèmes de réacteurs d'hydroconversion à lit bouillonnant (42, 70) comprennent un ou plusieurs réacteurs à lit bouillonnant, et
dans lequel le deuxième système de réacteur d'hydroconversion (20) inclut un deuxième système de réacteur d'hydroconversion à lit bouillonnant comprenant un ou plusieurs réacteurs à lit bouillonnant.

2. Procédé selon la revendication 1, comprenant, en outre :
le mélange de la fraction d'asphalte (15) avec un diluant avant la mise en contact avec l'hydrogène (16).

3. Procédé selon la revendication 2, dans lequel le diluant comprend au moins une d'une seconde portion d'un(e) fraction d'hydrocarbures résiduels, de coupes pétrolières recyclées CCF, de boues huileuses, d'extraits aromatiques, et de distillats de distillation directe sous vide.

4. Procédé selon la revendication 1, dans lequel la fraction d'huile désasphaltée (14) a une teneur en métaux supérieure à 80 wppm et une teneur en résidu de carbone Conradson supérieure à 10 % pds.

5. Procédé selon la revendication 1, comprenant, en outre, le recyclage de la fraction résiduelle de distillation sous vide (62) vers au moins un du désasphaltage de solvant, d'un système de distillation sous vide, du premier système de réacteur d'hydroconversion à lit bouillonnant (42), du deuxième système de réacteur d'hydroconversion (20), et du troisième système de réacteur d'hydroconversion à lit bouillonnant (70).

6. Procédé selon la revendication 1, dans lequel la fraction d'hydrocarbures résiduels (10) comprend au moins un de résidus de distillation sous vide ou atmosphérique de pétrole, d'huiles désasphaltées, de brai de désasphaltage, de fonds de tour à distillation sous vide ou de fonds de tour atmosphérique hydrocraqués, de distillats de distillation directe sous vide, de distillats hydrocraqués de distillation sous vide, de boues huileuses ayant subi un craquage catalytique fluide (CCF), de distillats de distillation sous vide provenant d'un procédé à lit bouillonnant, d'huiles de schiste, d'huiles dérivées du charbon, d'huiles brutes bio-dérivées, d'huiles de sables bitumineux, d'huiles de bois, d'huiles noires.

7. Procédé selon la revendication 1, dans lequel la mise en contact dans le premier système de réacteur d'hydroconversion à lit bouillonnant (42) se traduit par une conversion d'hydrocarbures dans la plage de 30 % pds à 75 % pds, une désulfuration dans la plage de 40 % pds à 65 % pds, une élimination des métaux dans la plage de 40 % pds à 65 % pds, et une élimination du résidu de carbone Conradson dans la plage de 30 % pds à 60 % pds.

8. Procédé selon la revendication 1, dans lequel un mazout produit par le fractionnement du troisième effluent du système de réacteur d'hydroconversion à lit bouillonnant (22) a une teneur en soufre de 1,5 % pds ou moins.

9. Procédé selon la revendication 1, dans lequel une conversion totale de la fraction d'hydrocarbures résiduels (10) se situe dans la plage de 75 % pds à 90 % pds.

10. Procédé selon la revendication 1, dans lequel le rapport de l'alimentation de la fraction d'asphalte traitée dans le troisième système d'hydroconversion à lit bouillonnant (70) à celle dans le premier système d'hydroconversion à lit bouillonnant (42) se situe dans la plage de 0,1/1 à 10/1.

11. Procédé selon la revendication 1, dans lequel un solvant utilisé dans une unité de désalphaltage au solvant (12) est un hydrocarbure léger contenant de 3 à 7 atomes de carbone.

12. Procédé selon la revendication 1, dans lequel, un solvant utilisé dans une unité de désalphaltage au solvant (12) est au moins un d'un solvant aromatique, d'un mélange de gazoles, et d'un naphta léger provenant du premier, du deuxième ou du troisième effluent fractionné ou importé.

13. Procédé selon la revendication 1, dans lequel, le fractionnement du troisième effluent (22) comprend en outre :
la séparation du troisième effluent (22) dans un séparateur (161) pour produire une fraction de vapeur (167) et une fraction de liquide (163) ;
le fractionnement de la fraction de liquide (163) pour récupérer la fraction résiduelle sous vide (40) dans un premier système de fractionnement (172) ;
la mise en contact de la fraction de vapeur (167) avec un quatrième catalyseur d'hydroconversion dans un quatrième système de réacteur d'hydroconversion (166) ;
la récupération d'un quatrième effluent (168) du quatrième système de réacteur d'hydroconversion (166) ; et
le fractionnement du quatrième effluent (168) pour récupérer une ou plusieurs fractions d'hydrocarbures (26, 28, 30, 32, 34) dans un deuxième système de fractionnement (146).
